# EUROPÄISCHE PATENTANMELDUNG

(11) **EP 1 959 160 A2**
(43) Veröffentlichungstag der Anmeldung: **20.08.2008**
(21) Anmeldenummer: 08001021.8
(22) Anmeldetag: 21.01.2008
(51) Int. Cl.: F16G 13/04

(54) **Zahnlaschenkette**

(30) Priorität: 13.02.2007 US 902138 P
(71) Anmelder: LuK Lamellen und Kupplungsbau Beteiligungs KG, 77815 Bühl (DE)
(72) Erfinder: Junig, Marcus, 77815 Bühl (DE); Simonov, Anton, 77815 Bühl (DE); Ispolatova, Olga, 77815 Bühl (DE); Pichura, Michael, 77815 Bühl (DE)

(57) **Zusammenfassung**

Zahnlaschenkette (1) mit einer Vielzahl von Kettenlaschen (2), die in Querrichtung (Z) Kettenglieder (I,II,III) bilden, wobei sich Laschen (2) benachbarter Kettenglieder teilweise überlappen und die Kettenglieder durch Gelenkbolzen (5), die durch Aufnahmeöffnungen (4) in einem Überlappungsbereich (3) der Kettenlaschen (2) ragen, gelenkig miteinander verbunden sind und zumindest ein Teil der Kettenlaschen (2) Laschenzähne (11) aufzeigt, wobei ein Teil der Kettenlaschen (2) eine Profilverschiebung der Laschenzähne (11) aufweist.

## Beschreibung

Die vorliegende Erfindung betrifft eine Zahnlaschenkette nach dem Oberbegriff des Anspruchs 1.

Zahnlaschenketten sind in vielfältigen Ausführungsformen aus dem Stand der Technik bekannt. Bei einer Zahnlaschenkette, die mit einer festen Übersetzung zwischen zwei Zahnrädern läuft, entsteht durch den Auftreffimpuls der Kettenlaschen auf die Zahnflanken der Zahnräder eine Körperschalleinleitung in das System, die eine Schallemission zur Folge hat. Die durch diesen Auftreffimpuls entstehenden Zahneingriffsfrequenzen sind bei allen Drehzahlen vorhanden. Die Drehzahl des Kettentriebes bestimmt die Frequenz, die umso höher wird, je schneller der Kettentrieb sich dreht.

Es ist bekannt, die akustischen Eigenschaften einer Zahnlaschenkette durch Randomisierung der Laschenlängen oder Randomisierung der Zahnflankenkontur zu verbessern. Des Weiteren ist es bekannt, eine Optimierung der Schallemissionen durch die parallele Anordnung zweier Zahnketten, die jeweils um eine halbe Laschenlänge zueinander versetzt laufen, zu bewirken.

Der vorliegenden Erfindung liegt die Aufgabe zugrunde, den Auftreffimpuls der Kettenlaschen auf die Zahnflanken eines Zahnrades zu reduzieren und somit den Einlaufimpuls in seiner Stärke und seiner Einwirkzeit auf das Zahnrad zu optimieren.

Dies wird gemäß der vorliegenden Erfindung erreicht durch eine Zahnlaschenkette mit einer Vielzahl von Kettenlaschen, die in Querrichtung Kettenglieder bilden, wobei sich die Laschen benachbarter Kettenglieder teilweise überlappen und die Kettenglieder durch Gelenkbolzen, die durch Aufnahmeöffnungen in einem Überlappungsbereich der Kettenlaschen ragen, gelenkig miteinander verbunden sind und zumindest ein Teil der Kettenlaschen Laschenzähne aufweist, wobei ein Teil der Kettenlaschen eine Profilverschiebung der Laschenzähne aufweist. Durch die Profilverschiebung wird bei einigen Kettengliedern eine gegenüber den anderen Kettengliedern veränderte Geometrie des Zahneingriffs zwischen der Zahnlaschenkette und einem umschlungenen Zahnrad bei Einlauf in das Zahnrad bewirkt. Die Kettenlaschen mit Profilverschiebung greifen also in einem anderen Abstand und zu einem relativ verschobenen Zeitpunkt gegenüber den Kettenlaschen ohne Profilverschiebung in das Zahnrad ein. Die Eingriffszeitpunkte sind dadurch ungleichmäßig über den Umfang der Laschenkette angeordnet, so dass sich zum Beispiel bei einer gleichmäßigen Drehzahl des Zahnkettengetriebes ungleichmäßige Eingriffszeitpunkte der jeweiligen Kettenglieder ergeben. Dies verhindert eine gleichmäßige Anregung der Laschenkette zu Trumschwingungen, was die Trumschwingungen insbesondere in Resonanzen durch die geringere Anregung vermindert.

Vorzugsweise ist vorgesehen, dass ein Teil der Kettenglieder einen ersten Laschentyp umfasst und ein anderer Teil der Kettenglieder den ersten Laschentyp sowie einen zweiten Laschentyp mit einer Profilverschiebung der Laschenzähne gegenüber dem ersten Laschentyp umfasst. Die Kettenlaschen mit Profilverschiebung werden also ungleichmäßig innerhalb der Laschenkette angeordnet. So kann vorgesehen sein, dass ein Teil der Kettenglieder nur den ersten Laschentyp umfasst und ein anderer Teil der Kettenglieder nur den zweiten Laschentyp mit einer Profilverschiebung der Laschenzähne gegenüber dem ersten Laschentyp umfasst. In diesem Fall werden also komplette Kettenglieder entweder aus den Laschen ohne Profilverschiebung oder aus den Laschen mit Profilverschiebung gebildet.

Die Zahnlaschenkette kann vorzugsweise zusätzliche Führungslaschen umfassen, die entweder innerhalb der Laschenreihen der Zahnlaschenkette angeordnet sind oder als Decklaschen an den seitlichen Rändern der Zahnlaschenkette angeordnet sind.

Vorzugsweise ist vorgesehen, dass die Außenkontur aller Kettenlaschen gleich ist und die Profilverschiebung durch eine Verschiebung der Anordnung von Aufnahmeöffnungen für Gelenkbolzen in den Laschen bewirkt wird. Die Kettenlaschen mit Profilverschiebung unterscheiden sich demzufolge von den Kettenlaschen ohne Profilverschiebung nur durch die Lage der Aufnahmeöffnungen innerhalb der Kettenlaschen. Vorzugsweise ist dabei vorgesehen, dass die Aufnahmeöffnungen der Kettenlaschen mit Profilverschiebung zu einer Kettenoberseite hin verschoben sind. Dadurch ragen die Zähne dieser Kettenlaschen weiter in Richtung der Kettenunterseite als dies bei den Kettenlaschen ohne Profilverschiebung der Fall ist. Dadurch kommen die Kettenlaschen mit Profilverschiebung eher in Kontakt mit einem umschlungenen Zahnrad bei Einlauf der Kettenlasche in das Zahnrad als dies bei Kettenlaschen ohne Profilverschiebung der Fall ist.

In einer alternativen Ausführungsform ist vorgesehen, dass die Außenkontur aller Kettenlaschen gleich ist und die Profilverschiebung durch eine Vergrößerung der Aufnahmeöffnungen für die Gelenkbolzen in den Kettenlaschen, wodurch das Spiel der Gelenkbolzen in den Aufnahmeöffnungen vergrößert wird, bewirkt wird. Zusätzlich oder alternativ zu der zuvor genannten Verschiebung der Lage der Aufnahmeöffnungen werden diese also vergrößert, so dass sich ein zusätzliches Spiel der Kettenlaschen gegenüber den Gelenkbolzen bzw. den Wiegestücken, aus denen die Gelenkbolzen gebildet sind, ergibt.

Im Folgenden werden Ausführungsbeispiele der Erfindung anhand der beiliegenden Zeichnungen erläutert. Dabei zeigen:
- Fig. 1: einen Ausschnitt aus einer Zahnlaschenkette nach Stand der Technik;
- Fig. 2: einen Ausschnitt aus einem ersten Ausführungsbeispiel einer erfindungsgemäßen Zahnlaschenkette mit einem ersten Ausführungsbeispiel einer erfindungsgemäßen Kettenlasche;
- Fig. 3: eine Kettenlasche mit Aufnahmeöffnungen nach Stand der Technik sowie nach dem ersten Ausführungsbeispiel der Erfindung;
- Fig. 4: einen Ausschnitt aus einem zweiten Ausführungsbeispiel einer erfindungsgemäßen Zahnlaschenkette mit einem zweiten Ausführungsbeispiel einer erfindungsgemäßen Kettenlasche.

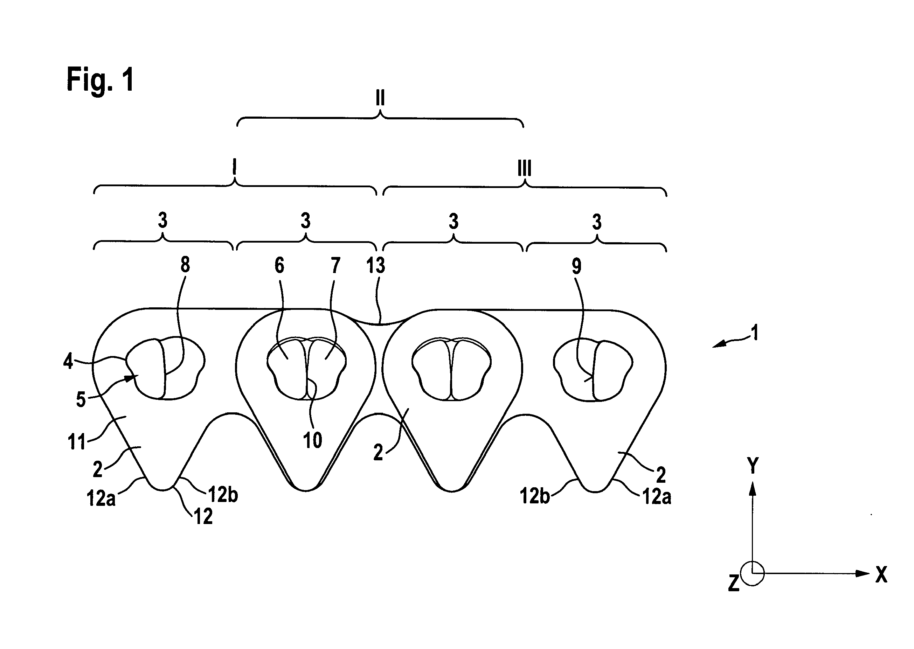

Fig. 1 zeigt einen Ausschnitt aus einer Zahnlaschenkette 1 nach Stand der Technik in einer Seitenansicht im Schnitt. Dargestellt sind drei benachbarte Kettenglieder I, II sowie III usw. Zur Unterscheidung von Richtungsangaben wird nachfolgend die in Fig. 1 mit X bezeichnete Richtung als Kettenlängsrichtung, Y als Höhenrichtung und Z als Querrichtung bezeichnet. Die Höhenrichtung Y wird in Richtung des Pfeiles Y als in Richtung der Kettenoberseite und entgegen der Pfeilrichtung als in Richtung der Kettenunterseite bezeichnet. Die Kettenglieder I, II sowie III der Zahnlaschenkette 1 umfassen mehrere Kettenlaschen 2, die in Querrichtung Z der Laschenkette jeweils voneinander beabstandet gestapelt sind und so Kettenglieder bilden. Die Kettenlaschen 2 benachbarter Kettenglieder überlappen sich dabei in Überlappungsbereichen 3. In den Überlappungsbereichen 3 der Kettenlaschen 2 sind jeweils Aufnahmeöffnungen 4 angeordnet, durch die Gelenkbolzen 5 ragen. Mittels der Gelenkbolzen 5 sind benachbarte Kettenglieder jeweils gelenkig miteinander verbunden. Die Gelenkbolzen 5 bestehen jeweils aus zwei Wiegestücken 6, 7, wobei jedes der Wiegestücke 6, 7 jeweils mit den Kettenlaschen 2 eines der Kettenglieder verbunden ist und die Wiegestücke 6, 7 an Wälzflächen 8, 9 aufeinander abwälzen. In der Darstellung der Fig. 1 ist das Wiegestück 7 mit den Kettenlaschen des Kettengliedes I verbunden, das Wiegestück 6 ist mit den Kettenlaschen des Kettengliedes II verbunden. Wird Zug auf die Zahnlaschenkette in Kettenlängsrichtung X ausgeübt, so werden die Wälzflächen 8, 9 aufeinander gedrückt, wobei sich diese in Wiegestückkontaktpunkten 10 berühren. Der Wiegestückkontaktpunkt 10 der zweidimensionalen Darstellung der Fig. 1 ist ein Punkt, dieser erstreckt sich selbstverständlich in Querrichtung Z entlang der Wiegestücke 6, 7 und bildet so in der dreidimensionalen Darstellung eine Kontaktlinie. Die Kettenlaschen 2 umfassen jeweils zwei Zähne 11, die jeweils Zahnflanken 12 aufweisen. Die Zahnflanken werden jeweils unterschieden in eine Außenflanke 12a und eine Innenflanke 12b. In Fig. 1 sowie den nachfolgenden Figuren nicht dargestellt sind Führungslaschen, die innerhalb der Laschenstapel angeordnet sein können und zur Führung der Zahnlaschenkette auf einem mit einer umlaufenden Nut versehenen Zahnrad dienen oder Decklaschen, die an den in Querrichtung Z jeweils gelegenen Außenseiten der Zahnlaschenkette 1 angeordnet sind und eine Führung in axialer Richtung eines Zahnrades durch Umgreifen der Zähne des Zahnrades bewirken.

In Fig. 1 ist eine aus dem Stand der Technik bekannte Maßnahme zur Verringerung des Einlaufimpulses bei Einlauf der Zahnlaschenkette 1 in ein von dieser umschlungenes Zahnrad dargestellt. Die Kettenglieder I, II, III usw. sind dabei aus Zahnlaschen gebildet, deren Zähne 11 unterschiedliche Außenkonturen der Zahnflanken 12 aufweisen. In der Zahnlaschenkette 1 werden somit zwei unterschiedliche Laschentypen verwendet, nämlich ein erster Laschentyp B mit einer Außenkontur der Zahnflanken vom Typ B und ein zweiter Laschentyp S mit einer Außenkontur der Zahnflanken vom Typ S. Die beiden Laschentypen B, S weisen also eine unterschiedliche Außenkontur auf, die Unterschiede in der Außenkontur bestehen dabei nur im Bereich der Zahnflanken. Zur Unterscheidung der beiden Laschentypen weist einer der Laschentypen beispielsweise eine Kerbe 13 als Unterscheidungsmerkmal bei der Montage der Laschenkette 1 auf.

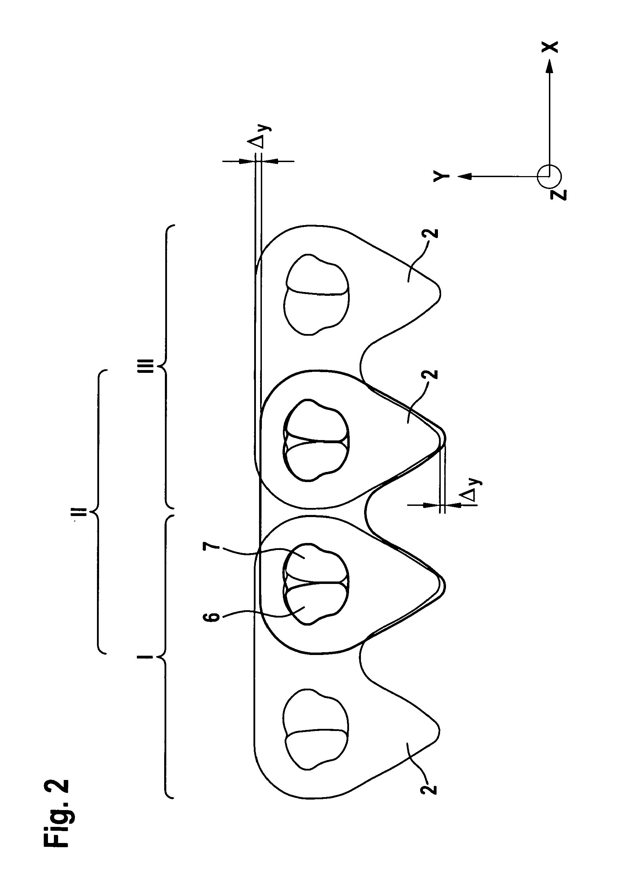

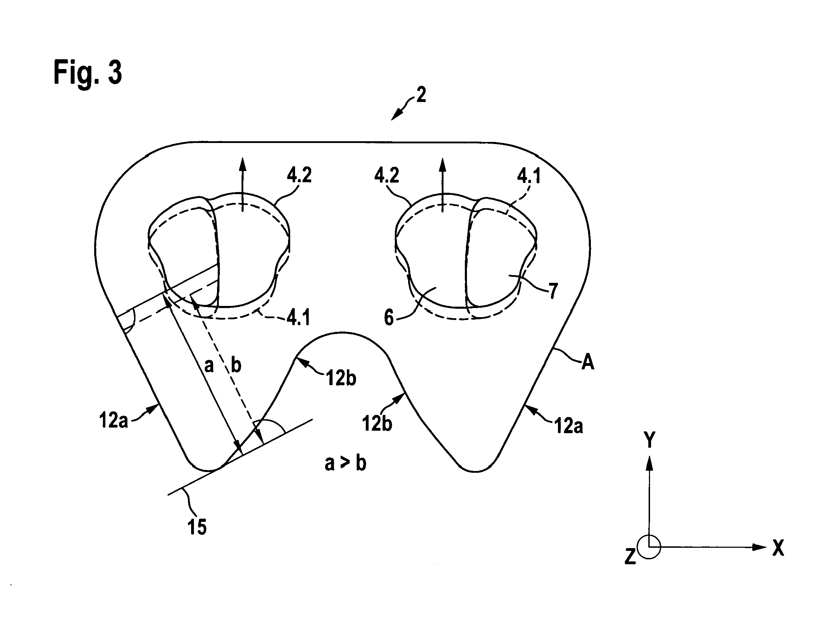

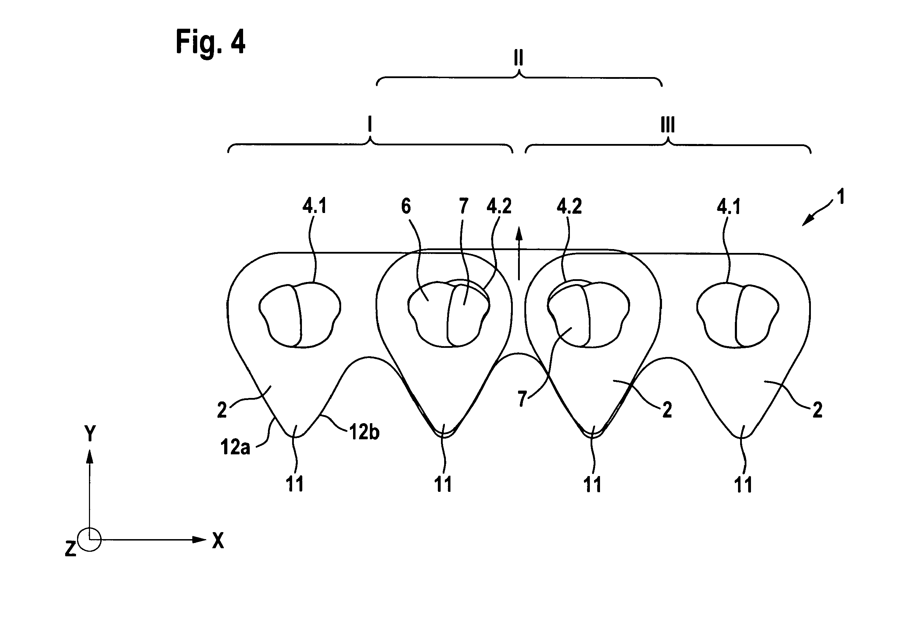

Fig. 2 zeigt eine erfindungsgemäße Laschenkette in einer Darstellung entsprechend der Fig. 1. Auch hier werden zwei Laschentypen, nämlich ein erster Laschentyp B, der identisch mit dem ersten Laschentyp B gemäß dem Ausführungsbeispiel der Fig. 1 ist, sowie ein zweiter Laschentyp A, der eine Profilverschiebung Δγ der Zahnflanken 12 bzw. der Zähne 11 aufweist, verwendet. Unter einer Profilverschiebung Δγ wird hier eine komplette Verschiebung des Profils und damit der Außenkontur der Zähne 11 in Höhenrichtung Y der Laschenkette 1 verstanden. Die Profilverschiebung wird dadurch bewirkt, dass bei gleicher Außenkontur sämtlicher Kettenlaschen 2 die Aufnahmeöffnungen 4 bei dem zweiten Laschentyp A gegenüber den Aufnahmeöffnungen 4 des ersten Laschentyps verschoben angeordnet sind. Dabei besteht die Möglichkeit, dass die Innenkontur der Aufnahmeöffnung 4 identisch ist, die Aufnahmeöffnung 4 also bei den beiden Laschentypen einzig unterschiedlich innerhalb der Kettenlasche angeordnet ist, oder dass die Aufnahmeöffnungen 4 selbst unterschiedliche Innenkonturen aufweisen. Diese beiden Ausführungsvarianten werden nachfolgend anhand der Fig. 3 und 4 beschrieben.

Fig. 3 zeigt die Außenkontur K eines Ausführungsbeispiels einer Kettenlasche, wobei die Außenkontur K für beide Laschentypen wie zuvor dargestellt identisch ist. Die beiden Laschentypen unterscheiden sich durch die Lage der Aufnahmeöffnungen, diese ist für den ersten Laschentyp B mit einer gestrichelten Linie 4.1 und für den zweiten Laschentyp A mit einer durchgezogenen Linie 4.2 dargestellt. Die Lage der Aufnahmeöffnungen 4.1 bzw. 4.2 kann durch den Wiegestückkontaktpunkt 10 bei gestreckter Laschenkette 1 definiert werden.

Im Ausführungsbeispiel der Fig. 3 wird davon ausgegangen, dass die Außenflanke 12a im Wesentlichen ein Geradenteilstück ist. Der Abstand der Zahnflanke 12 zum Wiegestückkontaktpunkt 10 wird hier definiert durch den Abstand einer Senkrechten auf die Außenflanke 12a, die durch den Wiegestückkontaktpunkt 10 geht und einer zu der Senkrechten 14 parallelen Geraden 15, die die Zahnflanke 12 berührt. Der erste Laschentyp B weist einen Abstand b der Zahnflanke zum Wiegestückkontaktpunkt 10 auf, der kleiner ist als der Abstand a der Zahnflanke zum Wiegestückkontaktpunkt 10 des zweiten Laschentyps A. Die beiden Laschentypen können daher aus gleichen Halbzeugen hergestellt werden, indem eine Aufnahmeöffnung 4 an unterschiedlichen Stellen eingebracht wird. Zusätzlich kann, wie im Stand der Technik üblich, ein Unterscheidungsmerkmal, wie beispielsweise eine Kerbe 13 oder dergleichen, an einem der beiden Laschentypen angebracht werden.

Fig. 2 zeigt ein zweites Ausführungsbeispiel einer erfindungsgemäßen Laschenkette. Hier wird die Profilverschiebung durch unterschiedliche Innenkonturen der Aufnahmeöffnungen 4 bewirkt. Die Aufnahmeöffnungen 4.2 des zweiten Laschentyps A weisen eine Innenkontur auf, die den Gelenkbolzen 5 ein größeres Spiel ermöglichen. Dies kann beispielsweise dadurch bewirkt werden, dass das Spiel der Wiegestücke der benachbarten Kettenglieder vergrößert ist. Dies ist in Fig. 4 anhand dreier Kettenglieder I, II, III entsprechend der Bezeichnung in Fig. 1 erläutert. Die Kettenlaschen 2 des Kettengliedes II weisen Aufnahmeöffnungen 4.2 auf, die zur Kettenoberseite hin vergrößert sind und so dem zugehörigen Wiegestück 7 ein größeres Spiel ermöglichen. Dadurch wird die Kettenlasche 2 des Kettengliedes II zur Kettenoberseite hin, dies ist durch einen Pfeil 16 gekennzeichnet, verschoben. Die Zahnflanken 12 des zweiten Laschentyps A kommen damit nicht so frühzeitig in Eingriff mit einem umschlungenen Zahnrad wie die Zahnflanken der Kettenlaschen vom ersten Laschentyp B. Eine Laschenkette 1 kann Kettenlaschen, die jeweils nur einen Laschentyp umfassen, aufgebaut sein. Es gibt dann also Kettenglieder, die nur den ersten Laschentyp umfassen sowie Kettenglieder, die nur den zweiten Laschentyp umfassen. Die Abfolge der Kettenglieder ist dabei beliebig, diese können wechselweise angeordnet werden oder es kann beispielsweise jedes zweite oder jedes dritte oder jedes vierte, usw. Kettenglied aus dem einen Laschentyp bestehen, die anderen Kettenglieder können jeweils aus dem anderen Laschentyp bestehen. Ebenso ist es aber möglich, die unterschiedlichen Laschentypen gemischt innerhalb der Kettenglieder zu verbauen. Beispielsweise ist es möglich, eine Kettenlasche eines Kettengliedes aus dem einen Laschentyp, alle anderen Kettenlaschen aus dem anderen Laschentyp zu verwenden. Dabei ist es z.B. möglich, nur einen geringen Teil der Kettenglieder mit dem zweiten Laschentyp auszustatten und ansonsten nur den ersten Laschentyp zu verwenden, so dass hier gezielt Störungen des Einlaufimpulses zur Verhinderung von Kettentrumschwingungen bewirkt werden können.

### Bezugszeichenliste

- 1: Zahnlaschenkette
- 2: Kettenlasche
- 3: Überlappungsbereich
- 4: Aufnahmeöffnung
- 5: Gelenkbolzen
- 6: Wiegestück
- 7: Wiegestück
- 8: Wälzfläche
- 9: Wälzfläche
- 10: Wiegestückkontaktpunkt
- 11: Zahn
- 12: Zahnflanke
- 13: Kerbe
- 14: Senkrechte
- 15: Gerade
- 16: Pfeil

## Patentansprüche

1. Zahnlaschenkette (1) mit einer Vielzahl von Kettenlaschen (2), die in Querrichtung (Z) Kettenglieder (I, II, III) bilden, wobei sich Laschen (2) benachbarter Kettenglieder (I, II, III) teilweise überlappen und die Kettenglieder (I, II, III) durch Gelenkbolzen (5), die durch Aufnahmeöffnungen (4) in einem Überlappungsbereich (3) der Kettenlaschen (2) ragen, gelenkig miteinander verbunden sind und zumindest ein Teil der Kettenlaschen (2) Laschenzähne (11) aufweist, **dadurch gekennzeichnet, dass** ein Teil der Kettenlaschen (2) eine Profilverschiebung (Δγ) der Laschenzähne (11) aufweist.

2. Zahnlaschenkette (1) nach Anspruch 1, **dadurch gekennzeichnet, dass** ein Teil der Kettenglieder einen ersten Laschentyp (B) umfasst und ein anderer Teil der Kettenglieder den ersten Laschentyp (B) sowie einen zweiten Laschentyp (A) mit einer Profilverschiebung (Δγ) der Laschenzähne (11) gegenüber dem ersten Laschentyp (B) umfasst.

3. Zahnlaschenkette (1) nach Anspruch 1, **dadurch gekennzeichnet, dass** ein Teil der Kettenglieder nur den ersten Laschentyp (B) umfasst und ein anderer Teil der Kettenglieder nur den zweiten Laschentyp (A) mit einer Profilverschiebung (Δy) der Laschenzähne (11) gegenüber dem ersten Laschentyp (B) umfasst.

4. Zahnlaschenkette (1) nach Anspruch 2 oder 3, **dadurch gekennzeichnet, dass** die Zahnlaschenkette (1) zusätzlich Führungslaschen umfasst.

5. Zahnlaschenkette (1) nach Anspruch 4, **dadurch gekennzeichnet, dass** die Führungslaschen Decklaschen sind.

6. Zahnlaschenkette (1) nach einem der vorstehenden Ansprüche, **dadurch gekennzeichnet, dass** die Außenkontur (K) aller Kettenlaschen (1) gleich ist und die Profilverschiebung (Δγ) durch eine Verschiebung der Anordnung von Aufnahmeöffnungen (4) für Gelenkbolzen (5) in den Kettenlaschen (2) bewirkt wird.

7. Zahnlaschenkette nach Anspruch 6, **dadurch gekennzeichnet, dass** die Aufnahmeöffnungen (4) bei den Kettenlaschen mit Profilverschiebung (Δγ) zu einer Kettenoberseite hin verschoben sind.

8. Zahnlaschenkette nach einem der vorstehenden Ansprüche, **dadurch gekennzeichnet, dass** die Außenkontur (K) aller Kettenlaschen (2) gleich ist und die Profilverschiebung (Δy) durch eine Vergrößerung der Aufnahmeöffnungen (4) für Gelenkbolzen (5) in den Kettenlaschen (2), wodurch das Spiel der Gelenkbolzen (5) in den Aufnahmeöffnungen (4) vergrößert wird, bewirkt wird.
